# EUROPEAN PATENT APPLICATION

(11) **EP 4 726 254 A1**
(43) Date of publication of application: **15.04.2026**
(21) Application number: 25827895.1
(22) Date of filing: 20.06.2025
(51) Int. Cl.: F21V 13/00, F21V 14/06, F21V 17/12, F21V 8/00

(54) **LAMP**

(30) Priority: 20.06.2024 CN 202421422733 U
(71) Applicant: Guangzhou Yajiang Photoelectric Equipment Co., Ltd., Guangzhou, Guangdong 510880 (CN)
(72) Inventor: CHEN, Zhiman, Guangzhou, Guangdong 510880 (CN); HUANG, Rongfeng, Guangzhou, Guangdong 510880 (CN); WANG, Guohai, Guangzhou, Guangdong 510880 (CN); YU, Zesong, Guangzhou, Guangdong 510880 (CN)
(74) Representative: Metida
(86) International application number: PCT/CN2025/102461
(87) International publication number: WO 2025/261496

(57) **Abstract**

A luminaire (1) comprises a light source (11), a light guide tube (12), a zoom barrel (13), and a converging lens (14). The light guide tube (12) has a first light inlet (12a) covering the light source (11). The zoom barrel (13) is sleeved on the light guide tube (12) and has a first light outlet (13a) distal to the light source (11). The converging lens (14) is arranged on the zoom barrel (13) and blocks the first light outlet (13a). Herein, the zoom barrel (13) is movable relative to the light guide tube (12) along a length direction of the light guide tube (12), to vary a distance between the light source (11) and the converging lens (14). The structure provides the simplified design of the luminaire (1), which can prevent the light obstruction at a large angle during illumination of the luminaire (1).

## Description

### TECHNICAL FIELD

The application relates to the field of lighting technology, more particularly to a luminaire.

### BACKGROUND

With the continuous improvement of lighting technology, as a critical part of lighting systems, luminaires have undergone greater diversification and innovation in design, along with significant enhancements in functionality and performance. Among the various functions of luminaires, the focusing capability is of particular importance, as it directly determines the light distribution pattern and the illumination area, thereby influencing the lighting effect and user experience.

The optical zoom mechanisms in existing luminaires generally achieve zooming through the movement of the light source installed inside the luminaire, or through the movement of the threaded lens mounted on the luminaire. However, the technical solutions that achieve zooming through the movement of the light source inside the luminaire usually require the movement of the heat dissipator corresponding to the light source. This necessitates larger and more complex structures to assist in moving the heat dissipators, thereby complicating the overall design of the luminaire and making maintenance, disassembly, and reassembly difficult. Furthermore, the technical solutions that achieve zooming through the movement of the threaded lens may result in noticeable light obstruction when the luminaire emits light with a wide beam angle during illumination.

### SUMMARY

The application is to provide a luminaire to solve the technical problems that existing luminaires have complex structures to achieve zooming and the threaded lens used to achieve zooming causes light obstruction at a large angle in waterproof structure design. The luminaire of this application not only can achieve zooming function with a simplified design, but also can avoid light obstruction at a large angle during the illumination.

In order to solve the above technical problems, an embodiment of the present application provides a luminaire, which comprises a light source, a light guide tube, a zoom barrel, and a converging lens. The light guide tube has a first light inlet covering the light source. The zoom barrel is sleeved on the light guide tube and has a first light outlet distal to the light source. The converging lens is arranged on the zoom barrel and blocks the first light outlet. Herein, the zoom barrel is movable relative to the light guide tube along a length direction of the light guide tube, to vary a distance between the light source and the converging lens.

In the luminaire of the present application, as the zoom barrel is sleeved over the light guide tube and movable relative to the light guide tube and has the first light outlet that is away from the light source, the focusing degree of the light that exits the light guide tube can be changed by adjusting the distance between the zoom barrel and the light source, thereby flexibly adjusting the illumination range and brightness and improving the lighting quality. Then, by moving the zoom barrel to vary the focal length, the luminaire eliminates the need for providing complex structures to move the light source along with it during the focusing process. It provides the simplified design of the luminaire, which can prevent light obstruction at a large angle when it performs focusing by using the threaded lens in the prior art.

In some embodiments of the present application, the light guide tube may be provided with a first light guiding channel, and along the length direction of the light guide tube, an end of the first light guiding channel proximal to the light source may be configured as a first light inlet.

Due to the first light guiding channel provided on the light guide tube, the light emitted by the light source can be uniformly spread out, avoiding the problems of glare and uneven light distribution. In addition, as the end of the first light guiding channel proximal to the light source is configured as the first light inlet, the light collection efficiency can be enhanced, the light quality can be optimized, and the light attenuation during transmission can be reduced.

In some embodiments of the present application, a cross-sectional area of the first light guiding channel may gradually increase in a direction along the length direction of the light guide tube away from the light source.

As the cross-sectional area of the first light guiding channel gradually increases in the direction away from the light source along the length direction of the light guide tube, the light that is emitted by the light source and passes through the light guide tube can illuminate the target area with a broader illumination range, and the angle between the light and the central axis of the light guide tube can be increased.

In some embodiments of the present application, an inner wall of the first light guiding channel may be provided with a reflective mirror surface.

As the inner wall of the first light guiding channel is provided with the reflective mirror surface, the light reflectivity can be improved, thereby ensuring that the energy loss during the light transmission within the light guiding channel can be reduced, the light attenuation during the light transmission can be significantly reduced, and the utilization rate of the light can be enhanced. Moreover, the reflective mirror surface can ensure that the light is transmitted along a predetermined path, preventing scattering or deviation from the predetermined path during transmission. This helps maintain the directionality and concentration of the light, enabling the light to illuminate the target area more precisely. Through multiple reflections of the light within the first light guiding channel, the brightness of the light can be increased. Such an enhancement effect makes the illumination more uniform and brighter, improving the illumination quality.

In some embodiments of the present application, the zoom barrel may be sleeved on an outer peripheral surface of the light guide tube.

As the zoom barrel is sleeved on the outer peripheral surface of the light guide tube, all the light rays that exit the light guide tube enters the zoom barrel, thereby enhancing the brightness of the light and improving the illumination quality. Furthermore, the arrangement of sleeving the zoom barrel over the outer peripheral surface of the light guide tube is beneficial for users to adjust the length of the zoom barrel and thus the zoom distance, thereby achieving the zooming effect.

In some embodiments of the present application, the zoom barrel may be provided with a second light guiding channel extending along a length direction of the zoom barrel, and an end of the second light guiding channel distal to the light source may be configured as a first light outlet.

As the end of the second light guiding channel distal to the light source is configured as the first light outlet, the body length of the zoom barrel can be fully utilized to increase the range of the focusing distance, thereby achieving improved light zooming.

In some embodiments of the present application, an inner wall of the second light guiding channel may be provided with a reflective mirror surface.

As the inner wall of the second light guiding channel is provided with the reflective mirror surface, the light reflectivity can be improved, ensuring that the energy loss during the light transmission within the light guiding channel can be reduced, the light attenuation during the light transmission can be significantly reduced, and the utilization rate of the light can be enhanced. Moreover, the reflective mirror surface can ensure that the light is transmitted along a predetermined path, preventing scattering or deviation from the predetermined path during the transmission. This helps maintain the directionality and concentration of the light, enabling the light to illuminate the target area more precisely. Through multiple reflections of the light within the second light guiding channel, the brightness of the light can be increased. Such an enhancement effect can make the illumination more uniform and brighter and improve the illumination quality.

In some embodiments of the present application, the zoom barrel may comprise a plurality of sub-zoom barrels sleeved within each other, and all the sub-zoom barrels may be movable relative to the light guide tube in the length direction of the light guide tube.

As the zoom barrel is provided with the plurality of sub-zoom barrels sleeved within each other, all of which are movable relative to the light guide tube in the length direction of the light guide tube, the distance between the light source and the converging lens can be fully adjusted to achieve zooming function of the zoom barrel, thereby altering the focal length to determine the degree of light convergence. When the zoom barrel moves to shorten the distance between the converging lens and the light source, the focal length shortens, the degree of light convergence increases, and the light density at the focal point increases. When the converging lens moves away from the light source, the focal length lengthens, the degree of light convergence decreases, and the light density at the focal point decreases.

In some embodiments of the present application, each of the sub-zoom barrels may be provided with a second light guiding sub-channel extending in the length direction of the sub-zoom barrel, and the second light guiding sub-channel may have a constant cross-sectional area along the length direction of the sub-zoom barrel.

As each of the sub-zoom barrels is provided with the second light guiding sub-channel that extends in its length direction and has the cross-sectional area remaining constant along its length direction, when the zoom barrel is moved, the angle of the light can remain unchanged, thereby making the light travel further and achieving the zooming function.

In some embodiments of the present application, all the sub-zoom barrels may be positioned on an outer side of the light guide tube, and a length of the one sub-zoom barrel closer to the light guide tube, along a first direction perpendicular to and extending away from a central axis of the light guide tube, may be greater than that of the one sub-zoom barrel farther from the light guide tube.

Due to the sub-zoom barrels provided on the outer side of the light guide tube, the distance between the zoom barrel and the light source can be adjusted through movement, thereby varying the focal length of the zoom barrel and improving shooting efficiency. Furthermore, the arrangement, where the length of the one closer to the light guide tube along the first direction perpendicular to and away from the central axis of the light guide tube is greater than that of the one farther from the light guide tube, has advantages of improving the maneuverability of the movement of the zoom barrel and facilitating the user to achieve the zoom function.

### BRIEF DESCRIPTION OF THE DRAWINGS

FIG.1 is a schematic structural view of a luminaire emitting light with a narrow beam angle according to an embodiment of the application;
FIG.2 is a schematic structural view of a luminaire emitting light with a medium beam angle according to an embodiment of the application;
FIG.3 is a schematic structural view of a luminaire emitting light with a wide beam angle according to an embodiment of the application;
FIG.4 is a structural schematic view of a cross section of a luminaire according to an embodiment of the application;
FIG.5 is a structural schematic view of a cross section of a further luminaire according to an embodiment of the application;

The reference numerals in the drawings and their corresponding names are as follows.
1. luminaire;
11. light source; 12. light guide tube; 13. zoom barrel; 14. converging lens; 15. threaded lens; 16. housing;
12a. first light inlet; 13a. first light outlet;
12b. first light guiding channel; 13b. second light guiding channel;
131. sub-zoom barrels;
131a. second light guiding sub-channel.

### DETAILED DESCRIPTION OF ILLUSTRATED EMBODIMENTS

The technical solutions of embodiments of the disclosure will be clearly and completely described below in conjunction with the accompanying drawings. Apparently, the described embodiments are merely a part rather than all of the embodiments of the disclosure. All other embodiments obtained by those of ordinary skill in the art based on the embodiments of the disclosure without creative efforts shall fall within the scope of the application.

In addition, for the purpose of simplicity and clarity, sizes or thicknesses of the components and layers may be enlarged in the drawings. The same numerals used through the text refer to the same elements. The terms "and/or", "and/alternatively" as used in the description include all combinations of any one or more of the listed items. In addition, it should be understood that an element A is referred to as being connected to an element B may indicates that the element A is directly connected to the element B, or the element A is indirectly connected to the element B via an intermediate element C.

Furthermore, the term "may" as used in the description of embodiments of the application refers to one or more of the embodiments of the application.

The technical terms as used herein serve to illustrate particular embodiments, but are not intended to limit the application. Unless explicitly stated in the context otherwise, singular forms as used herein are also intended to include the plural forms. Furthermore, it should be understood that the term "comprise" as used in the description indicates that a described feature, value, step, operation, element, and/or component is provided, but does not exclude one or more additional features, values, steps, operations, elements, components, and/or combinations thereof.

The space-related terms, such as "above" as used herein, are intended to facilitate description of the relationship between one element or feature and another element(s) or feature(s) as depicted in the drawings. It should be understood that, in addition to the directions depicted in the drawings, the space-related terms are intended to illustrate various orientations of the equipment or device during use or operation. For instance, if the device in a drawing is flipped over, an element described as being "above" or "on" another element or feature would then be oriented "below" or "under" the latter. Therefore, the exemplary term "above" may encompass both upward and downward directions.

It should be understood that although the terms such as "first", "second", and "third" may be used herein to describe various elements, components, regions, layers, and/or sections, these elements, components, regions, layers, and/or sections should not be limited by these terms. These terms are used to distinguish one element, component, region, layer, or section from another. Therefore, the first element, component, region, layer, or section discussed below may be referred to as the second element, component, region, layer, or section, without deviating from the teachings of the exemplary implementations.

The optical zoom mechanisms in existing luminaires generally achieve zooming through the movement of the light source installed inside the luminaire, or through the movement of the threaded lens mounted on the luminaire. However, the technical solutions that achieve zooming through the movement of the light source inside the luminaire usually require the movement of the heat dissipator corresponding to the light source. This necessitates larger and more complex structures to assist in moving the heat dissipators, thereby complicating the overall design of the luminaire and making maintenance, disassembly, and reassembly difficult. Furthermore, the technical solutions that achieve zooming through the movement of the threaded lens are typically provided with threaded structures on the lens assembly or the lens barrel to enable focal length adjustment. One issue is that the threaded structures may partially block the light. Additionally, to ensure the waterproof performance of the luminaire, sealing treatments are required at the threaded connections or at the interfaces between the lens assembly and the lens barrel, and these sealing treatments may result in noticeable light obstruction when the luminaire emits light with a wide beam angle during illumination.

The luminaire provided in the embodiments of the application solves the technical problems that existing luminaires have complex structures to achieve zooming and the threaded lens used to achieve zooming causes light obstruction at large angles in waterproof structure design. The luminaire not only achieves zooming function with a simplified design, but also avoids light obstruction at large angles during the illumination.

To address the technical problems that existing luminaires have complex structures to achieve zooming and the threaded lens used to achieve zooming causes light obstruction at large angles in waterproof structure design, the overall idea of the technical solution in the embodiments of the application is as follows.

As the first light inlet of the light guide tube of the luminaire covers the light source, the light passing through the light guide tube is more concentrated and brighter. As the zoom barrel is sleeved on the light guide tube and the converging lens blocks the first light outlet of the zoom barrel distal to the light source, all light that passes through the first light outlet can be regulated by the converging lens. As the zoom barrel is movable relative to the light guide tube along the length direction of the light guide tube, the distance between the light source and the converging lens varies, to achieve the zoom function.

To facilitate understanding, the technical solutions will be further explained below in detail with reference to drawings and particular implementations.

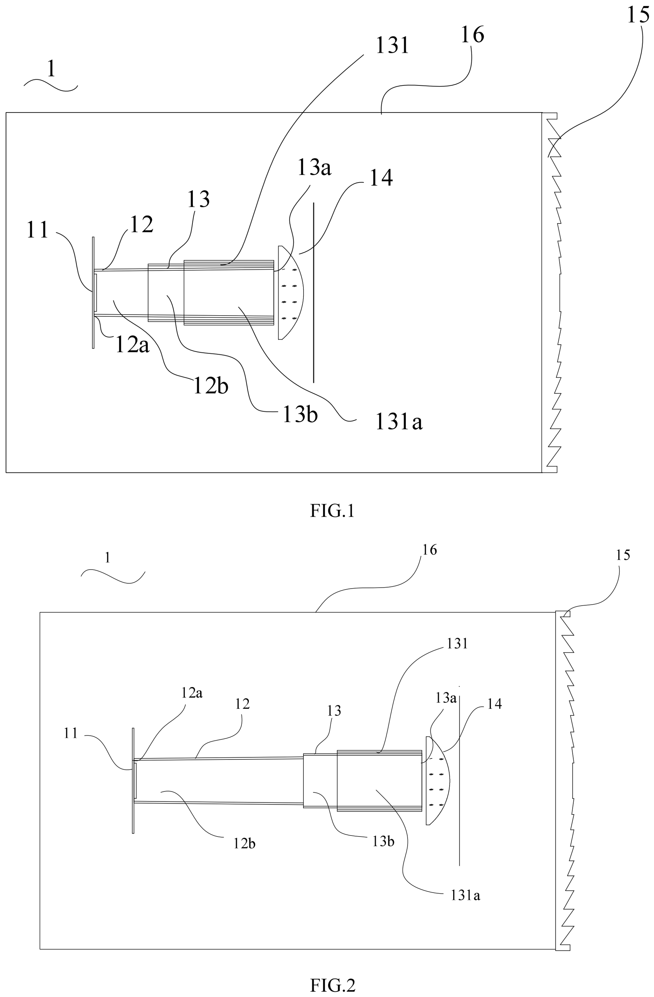

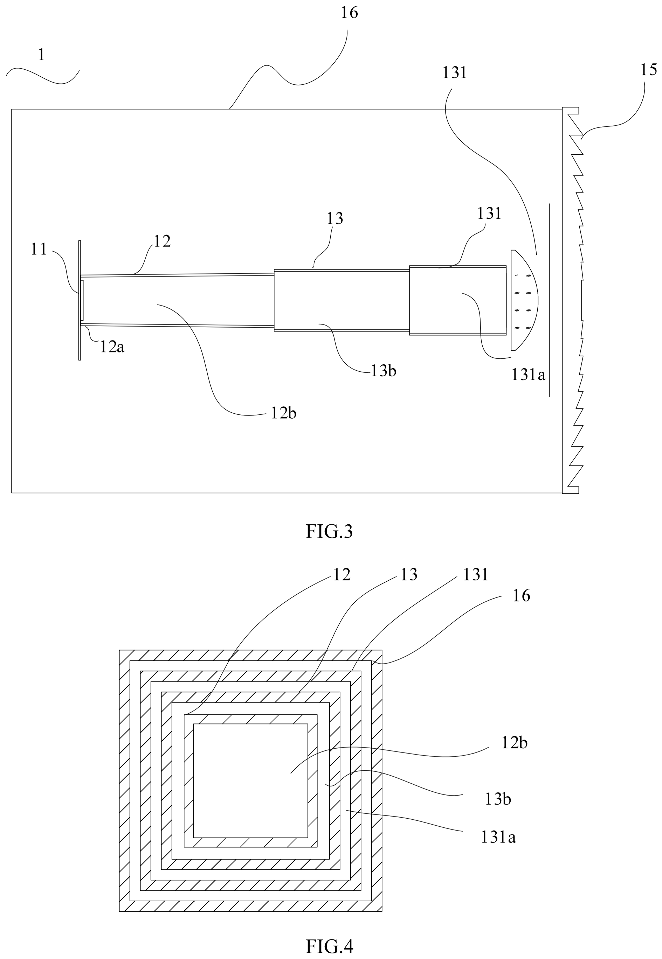

Refer to FIGs.1-3 together. Herein, FIG.1 is a schematic structural view of a luminaire 1 emitting light with a narrow beam angle according to an embodiment of the application; FIG.2 is a schematic structural view of a luminaire 1 emitting light with a medium beam angle according to an embodiment of the application; FIG.3 is a schematic structural view of a luminaire 1 emitting light with a wide beam angle according to an embodiment of the application.

In the present embodiment, the luminaire 1 comprises a light source 11, a light guide tube 12, a zoom barrel 13, and a converging lens 14.

The light guide tube 12 is provided with a first light inlet 12a that covers the light source 11. During operation of the luminaire 1, the light source 11 emits light that enters the light guide tube 12 through the first light inlet 12a. The light guide tube 12 of the luminaire 1 which has the first light inlet 12a covering the light source 11 has a strong light-gathering effect, concentrating the light emitted by the light source 11 into a relatively small area and making the light passing through the light guide tube 12 more concentrated and brighter. Such a light-gathering effect is particularly crucial in lighting scenarios where it is necessary to highlight a specific object or area. Moreover, as the first light inlet 12a covers the light source 11, the direction and range of the light can be controlled based on the shape and orientation of the light guide tube 12, thereby ensuring that the light can be directed to specific areas as required and avoiding unnecessary interference with other areas.

The zoom barrel 13 is sleeved on the light guide tube 12. The zoom barrel 13 has a first light outlet 13a distal to the light source 11. The converging lens 14 is disposed on the zoom barrel 13 and blocks the first light outlet 13a of the zoom barrel 13. The zoom barrel 13 is movable, in the length direction of the light guide tube 12, relative to the light guide tube 12 to change the distance between the light source 11 and the converging lens 14. The light emitted from the light source 11 can enter the light guide tube 12 through the first light inlet 12a of the light guide tube 12, and then pass through the light guide tube 12 and enter the zoom barrel 13. As the zoom barrel 13 is movable relative to the light guide tube 12, the distance that the light travels inside the zoom barrel 13 can be either longer or shorter. When the zoom barrel 13 moves to shorten the distance between itself and the light source 11, the distance that the light travels inside the zoom barrel 13 becomes shorter. As a result, the distance between the light source 11 and the converging lens 14 becomes shorter. In this way, the focal length of the luminaire 1 shortens, achieving the focusing function. When the zoom barrel 13 moves to lengthen the distance between itself and the light source 11, the distance that the light travels inside the zoom barrel 13 becomes longer. As a result, the distance between the light source 11 and the converging lens 14 becomes longer. In this way, the focal length of the luminaire 1 lengthens, achieving the focusing function. Moreover, due to the converging lens 14 provided on the zoom barrel 13 and blocking the first light outlet 13a, all the light rays that pass through the first light outlet 13a can be regulated by the converging lens 14. Consequently, without the need to move either the light source 11 or the threaded lens 15, the luminaire 1 with a simple internal structure can achieve the focusing function. In addition, when designing a waterproof structure, light obstruction at large angles will not occur.

In some embodiments, the light source 11 may be a colored light source 11 that is capable of emitting non-white light. Its spectrum is dominated by that of a monochromatic light, thus appearing as a "pure color". The Light-emitting diode (LED) is a common form of the colored light source 11, which has a narrow spectrum, good monochromaticity, and has characteristics such as high luminous efficacy, high energy efficiency, a wide range of light colors, high safety, long service life, rapid response, and low operating costs. Providing the colored light source 11 on the luminaire 1 facilitates applications of the luminaire 1 in multiple fields. For example, during stage lighting, the colored light source 11 can provide rich color variations for stage performances. Also, the colored light source 11 has wide applications in various fields such as landscape lighting, traffic signals, and automotive lighting.

In some embodiments, the light guide tube 12 may be a light-mixing assembly. The light emitted by the light source 11 enters the interior of the light-mixing assembly through the first light inlet 12a. The light-mixing assembly controls the light input and output of the light sources 11 of different colors, to enable switching and mixing of the light sources 11 of different colors. By providing the light guide tube 12 as a light-mixing assembly, it is possible to achieve the mixing of multiple colors of light, creating richer lighting effects. For example, in the fields of display and projection, the light-mixing assembly can be used to achieve more realistic and delicate color representation.

In some embodiments, the lens of the converging lens 14 may consist of two lenses. Compared to a single lens, two lenses offer stronger light-gathering capabilities. In the present embodiment, an achromatic converging lens 14 may also be used as the converging lens 14. The achromatic converging lens 14, which consists of a series of lenses and has a high degree of correction for chromatic and spherical aberrations, can provide ideal images. It represents the converging lens 14 with the highest imaging quality in bright-field microscopy, and its numerical aperture (NA value) can reach 1.4.

In some embodiments, the converging lens 14 disposed on the zoom barrel 13 is detachable. For example, the converging lens 14 may be secured to the zoom barrel 13 through screw connection, by using fasteners such as screw rods and nuts. The detachable design allows users to quickly replace or adjust the combination of the converging lens 14 and the zoom barrel 13 according to actual needs. Under different shooting or lighting requirements, users can select the most suitable combination of the converging lens 14 and the zoom barrel 13 to achieve optimal shooting or lighting effects. If the converging lens 14 or the zoom barrel 13 malfunctions or is damaged, users can easily disassemble and replace the faulty part without the need to replace the entire system. This not only reduces maintenance costs, but also improves the maintainability and service life of the device. The detachable design also enhances the expandability of the converging lens 14 and the zoom barrel 13. Users can add or remove different converging lenses 14 and zoom barrels 13 as needed, to meet various shooting or lighting requirements. For example, when a stronger light-gathering effect is required, a high-magnification converging lens 14 may be added. Compared to a design where the converging lens 14 and the zoom barrel 13 are integrally connected, the detachable connection design enables users to purchase and replace the converging lens 14 or the zoom barrel 13 individually without the need to purchase the entire system. This not only reduces the initial purchase cost, but also makes subsequent upgrades and maintenance more cost-effective.

In further embodiments, the converging lens 14 on the zoom barrel 13 may be integrally connected with the zoom barrel 13. The integral connection design of the converging lens 14 with the zoom barrel 13 can reduce the gaps between the components, making the overall device has more compact structure and improving the stability of the device. Such an integral connection design also reduces the risk of performance degradation or malfunctions caused by component loosening or misalignment. Moreover, the integral connection design of the converging lens 14 with the zoom barrel 13 can optimize the optical performance between the converging lens 14 and the zoom barrel 13, reducing light loss or refraction effects at the connecting position. This helps maintain the integrity of the light beam and improves the clarity and quality of imaging. The integral connection design of the converging lens 14 with the zoom barrel 13 also simplifies the operation of the device. Users do not need to worry about the disassembly and assembly of the components. The device is more convenient and efficient to use, thereby improving work efficiency. Besides, the integral connection design of the converging lens 14 with the zoom barrel 13 typically employs high-quality materials and manufacturing processes, enhancing the durability and reliability of the device. Such a design also allows the device to withstand harsher environmental conditions and use pressures, extending its service life.

In some embodiments, the luminaire 1 is provided with a housing 16, and all the light source 11, the light guide tube 12, and the threaded lens 15 are fixed to the housing. Herein, the light source 11 is fixedly arranged at one end of the housing 16, and along the length direction of the housing 16, the threaded lens 15 is fixedly arranged at the other end of the housing 16 distal to the light source 11.

In the prior art, zooming is typically achieved by adjusting the relative spacing of a set of lenses provided on the lens assembly through a screw pair provided on the lens assembly. On one hand, during this process, the threaded lens needs to move via the threaded mechanism, requiring a greater length of the threaded mechanism to ensure sufficient movement of the threaded lens. However, the longer threaded mechanism may cause some light obstruction. On the other hand, to achieve a waterproof design for the luminaire, the threaded connection or the interface between the lens assembly and the lens barrel necessitates sealing treatment, such as by using O-rings or silicone rubber. This also increases the risk of light obstruction. Therefore, zooming that is achieved by using the movement of the threaded lens may result in significant light obstruction at large angles.

In the embodiments of the present application, as the converging lens 14 is movable relative to the housing 16, the focal length can be adjusted by varying the distance between the converging lens 14 and the light source 11. Thus, the threaded lens 15 that is fixedly connected to the housing 16 does not need to move. The screw pair is used for the fixed connection. Hence, the length of the screw pair may be relatively short. In the waterproofing design, light obstruction at large angles caused by the waterproof structure or the screw pair can be prevented.

In some embodiments, the threaded lens 15 may use materials such as glass, resin, and polycarbonate, to ensure its good light-transmitting performance. Different materials for the threaded lens 15 can be selected for different scenarios. For example, resin and polycarbonate are good choices for scenarios requiring high light transmittance and portability, and glass is more suitable for scenarios requiring high hardness and chemical stability.

In further embodiments, the threaded lens 15 may be connected to the housing in a detachable manner or may be fixedly and integrally connected to the housing. The present application is not intended to limit the connection method between the threaded lens 15 and the housing 16, or the types of materials for the threaded lens.

Refer to FIGs.1-3 together. In the present embodiment, the light guide tube 12 is provided with a first light guiding channel 12b, and along the length direction of the light guide tube 12, an end of the first light guiding channel 12b proximal to the light source 11 is configured as the first light inlet 12a. When the luminaire 1 is in use, the light emitted by the light source 11 enters the first light guiding channel 12b of the light guide tube 12 through the first light inlet 12a and continues to illuminate along the length direction of the light guide tube 12. Due to the first light guiding channel 12b provided on the light guide tube 12, the light emitted by the light source 11 can be uniformly spread out, avoiding the problems of glare and uneven light distribution. As the end of the first light guiding channel 12b proximal to the light source 11 is configured as the first light inlet 12a, the light collection efficiency can be enhanced, the light quality can be optimized, and the light attenuation during transmission can be reduced.

Refer to FIGs.1-3 together. In the present embodiment, in the length direction of the light guide tube 12 away from the light source 11, the cross-sectional area of the first light guiding channel 12b gradually increases. Thus, the cross-sectional area at the end (i.e., the first light inlet 12a) of the first light guiding channel 12b proximal to the light source 11 is smaller than the cross-sectional area at the position where the light exits the first light guiding channel 12b, such that the angle formed between the light and the axis of the first light guiding channel 12b when the light exits the first light guiding channel 12b is increased. Hence, the luminaire 1 can provide a broader illumination range.

As the cross-sectional area of the first light guiding channel 12b gradually increases, the stability and ease of use of the luminaire 1 are enhanced. Such a special shape results in a good stability of the luminaire, whether during storage or transportation. Besides, if the cross-sectional area of the first light guiding channel 12b gradually increases and the outer diameter of the light guide tube 12 follows the same trend, the luminaire 1 can be easily stacked to save space, which is a significant advantage for material management. The gradual increase in the cross-sectional area of the first light guiding channel 12b gives the luminaire 1 a unique appearance and structure. This unique appearance and structure not only enhance the aesthetic appeal of the luminaire 1, but also bring a distinct three-dimensional effect, creating a strong sense of space. It should be noted that this design facilitates handling of the luminaire 1 by human. By gripping the portion of the luminaire 1 with a smaller cross-section, the user can control the entire luminaire 1. In some embodiments, the cross-sectional area of the first light guiding channel 12b can also be designed to remain constant or gradually decrease in the length direction of the light guide tube 12 away from the light source 11.

Refer to FIGs.1-3 together. In the present embodiment, the inner wall of the first light guiding channel 12b is provided with a reflective mirror surface. After the light emitted by the light source 11 enters the first light guiding channel 12b through the first light inlet 12a, the light can undergo total internal reflection on the inner wall of the first light guiding channel 12b of the light guide tube 12. This can improve the light reflectivity, ensuring that the energy loss during their transmission within the light guiding channel is reduced, the light attenuation during their transmission is significantly reduced, and the utilization rate of the light is enhanced. Moreover, the reflective mirror surface can ensure that the light is transmitted along a predetermined path, preventing scattering or deviation from the predetermined path during transmission. This helps maintain the directionality and concentration of the light, enabling the light to illuminate the target area more precisely. Through multiple reflections of the light within the first light guiding channel 12b, the brightness of the light can be increased. Such an enhancement effect can make the illumination more uniform and brighter and improves the illumination quality.

Refer to FIGs.1-3 together. In the present embodiment, the zoom barrel 13 is sleeved on the outer peripheral surface of the light guide tube 12. As the zoom barrel 13 is sleeved on the outer peripheral surface of the light guide tube 12, the luminaire 1 can make full use of the light emitted by the light source 11 through the zoom barrel 13, thereby reducing unnecessary power consumption. For places where the luminaire 1 is used for photography for long periods, a significant amount of electrical energy can be saved. As the zoom barrel 13 is sleeved on the outer peripheral surface of the light guide tube 12, users can easily adjust the length of the zoom barrel 13 and thus the degree of light focusing. This enables precise control over the light and improves the illumination flexibility. Whether in close-distance illumination that requires a strong spotlight effect or long-distance illumination that requires a wide floodlight effect, the zoom barrel 13 can meet the requirements. In some embodiments, the zoom barrel 13 may also be sleeved on the inner peripheral surface of the light guide tube 12. In some embodiments, in the direction perpendicular to the length of the light guide tube 12, the size of the zoom barrel 13 may be 1-2mm larger than that of the light guide tube 12.

Refer to FIGs.1-3 together. In the present embodiment, the zoom barrel 13 is provided with a second light guiding channel 13b extending along the length direction of the zoom barrel 13. An end of the second light guiding channel 13b distal to the light source 11 is configured as the first light outlet 13a. After the light passes the first light guiding channel 12b and exits the light guide tube 12, the light enters the second light guiding channel 13b of the zoom barrel 13. Then, the light exits the second light guiding channel 13b through the first light outlet 13a at the end of the zoom barrel 13 distal to the light source 11. Such a design can fully utilize the length of the zoom barrel 13, thereby enabling the adjustment of the distance between the light source 11 and the converging lens 14. In this way, the focal length can be adjusted, to achieve the focusing function.

Refer to FIGs.1-3 together. In the present embodiment, the inner wall of the second light guiding channel 13b is provided with a reflective mirror surface. After the light enters the second light guiding channel 13b, the light can undergo total internal reflection on the inner wall of the second light guiding channel 13b. This can improve the light reflectivity, ensuring that the energy loss during their transmission within the light guiding channel is reduced, the light attenuation during their transmission is significantly reduced, and the utilization rate of the light is enhanced. Moreover, the reflective mirror surface can ensure that the light is transmitted along a predetermined path, preventing scattering or deviation from the predetermined path during the transmission. This helps maintain the directionality and concentration of the light, enabling the light to illuminate the target area more precisely. Through multiple reflections of the light within the second light guiding channel 13b, the brightness of the light can be increased. Such an enhancement effect can make the illumination more uniform and brighter and improve the illumination quality.

Refer to FIGs.1-3 together. In the present embodiment, the zoom barrel 13 comprises a plurality of sub-zoom barrels 131 sleeved within each other, and all the sub-zoom barrels 131 are movable relative to the light guide tube 12 in the length direction of the light guide tube 12. Thus, the zoom barrel 13, which comprises the plurality of sub-zoom barrels 131 sleeved within each other, makes it possible to utilize the length of these sub-zoom barrels 131 to vary the distance between the light source 11 and the converging lens 14, thereby increasing the adjustable range of the distance between the light source 11 and the converging lens 14 to alter the focal length, and determining the degree of light convergence.

In some embodiments, among two adjacent sub-zoom barrels 131, the one (i.e., the outer sub-zoom barrel 131) that is farther from the axis of the light guide tube 12 along the direction perpendicular to the length of the light guide tube 12 has a maximum longitudinal length of the cross-section that is 1-2mm greater than that of the one (i.e., the inner sub-zoom barrel 131) closer to the axis of the light guide tube 12. If the cross-sectional shape of the sub-zoom barrels 131 is circular, then "the maximum longitudinal length of the cross-section" refers to "the diameter" of the circle. If the cross-sectional shape of the sub-zoom barrels 131 is of another shape, then "the maximum longitudinal length of the cross-section" refers to the maximum distance between two points on that cross-section.

In some embodiments, among two adjacent sub-zoom barrels 131, the length of the one that is farther from the axis of the light guide tube 12 along the direction perpendicular to the length of the light guide tube 12 is 10-20mm shorter than that of the one closer to the axis of the light guide tube 12.

Furthermore, please refer to FIG.1. In the present embodiment, the second light guiding channel 13b of the zoom barrel 13 completely coincides with the first light guiding channel 12b of the light guide tube 12, and the second light guiding sub-channel 131a of the sub-zoom barrels 131 also completely coincides with the second light guiding channel 13b of the zoom barrel 13. In such a case, the distance between the converging lens 14 and the light source 11 on the luminaire 1 is the minimum, a smallest and brightest light spot is formed, and the light path of the luminaire 1 has the minimum angle.

Furthermore, please refer to FIG.2. In the present embodiment, the second light guiding channel 13b of the zoom barrel 13 does not coincide with the first light guiding channel 12b of the light guide tube 12, but the second light guiding sub-channel 131a of the sub-zoom barrels 131 completely coincides with the second light guiding channel 13b of the zoom barrel 13. In such a case, the distance between the converging lens 14 and the light source 11 on the luminaire 1 is medium, a light spot of medium size and medium brightness is formed, and the light path of the luminaire 1 has a medium angle.

Furthermore, please refer to FIG.3. In the present embodiment, the second light guiding channel 13b of the zoom barrel 13 either does not coincide with the first light guiding channel 12b of the light guide tube 12 or only coincides with a small part of it (the length of the coinciding area is the minimum), and the second light guiding sub-channel 131a of the sub-zoom barrels 131 either does not coincide with the second light guiding channel 13b of the zoom barrel 13 or only coincides with a small part of it (the length of the coinciding area is the minimum). In such a case, the distance between the converging lens 14 and the light source 11 on the luminaire 1 is the maximum, and the light path of the luminaire 1 has the maximum angle.

Refer to FIGs.1-3 together. In the present embodiment, the sub-zoom barrel 131 is provided with a second light guiding sub-channel 131a extending in the length direction of the sub-zoom barrel 131, and the cross-sectional area of the second light guiding sub-channel 131a remains constant along the length direction of the sub-zoom barrel 131. Due to the second light guiding sub-channel 131a which extends along the length direction of the sub-zoom barrel 131 on the sub-zoom barrels 131 and has a constant cross-sectional area along the length direction of the sub-zoom barrel 131, the angle of the light can remain unchanged when the zoom barrel 13 is moved, thereby making the light travel further and achieving the zooming function.

Refer to FIGs.1-3 together. In the present embodiment, all the sub-zoom barrels 131 are positioned on the outer side of the light guide tube 12. Along a first direction which is perpendicular to and extends away from the central axis of the light guide tube 12, the length of the one sub-zoom barrel 131 closer to the light guide tube 12 is greater than that of the one sub-zoom barrel 131 farther from the light guide tube 12. The arrangement of sleeving the sub-zoom barrels 131 on the outer side of the light guide tube 12 facilitates the adjustment of the distance between the zoom barrel 13 and the light source 11 through movement, and thus facilitates alteration of the focal length of the zoom barrel 13 to enhance shooting efficiency. The arrangement, where along a first direction perpendicular to and extending away from the central axis of the light guide tube 12, the length of the one sub-zoom barrel 131 closer to the light guide tube 12 is greater than that of the one sub-zoom barrel 131 farther from the light guide tube 12, has the advantage of improving the maneuverability of moving the zoom barrel 13, which is beneficial for the user to achieve the zoom function.

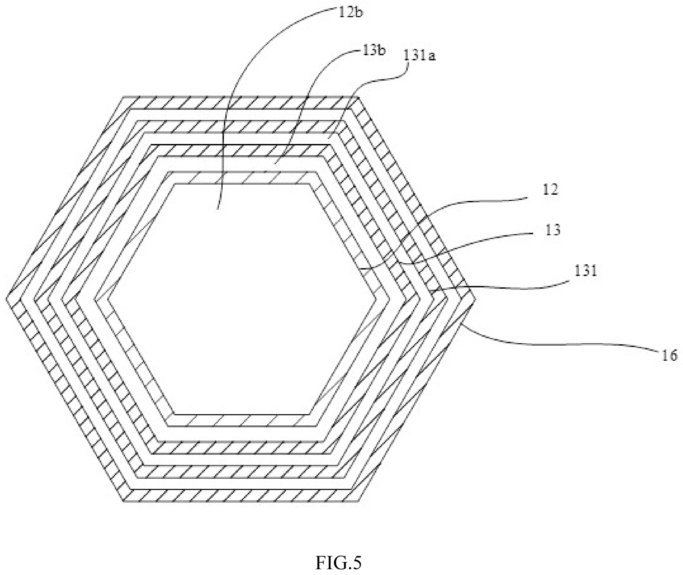

Refer to FIGs.4 and 5 together. Herein, FIG. 4 is a structural schematic view of the cross-section of the luminaire 1 according to the embodiment of the present application; FIG. 5 is a structural schematic view of the cross-section of a further luminaire 1 according to the embodiment of the present application. In other words, in some embodiments of the present application, the cross-section of the first light-guiding channel 12b is polygonal.

Furthermore, the first light guiding channel 12b may be configured to have a cross section in a shape of a square or a regular hexagon. The configuration of the first light guiding channel 12b with the square or regular hexagon cross-section enables a more stable light transmission path within the first light guiding channel 12b and reduces the refraction loss, thereby improving the reliability and efficiency of the optical signal transmission. In some embodiments, the first light guiding channel 12b may be configured to have a circular cross section. Due to the shape and structural advantages of the first light guiding channel 12b with the circular cross section, it exhibits improved durability when subjected to external pressure or impact. Moreover, the circular design of the first light guiding channel 12b helps achieve uniform light distribution and reduces problems such as shadows or glare caused by uneven light distribution.

In some embodiments of the present application, the cross-section of the second light guiding channel 13b may be a polygon. Furthermore, the second light guiding channel 13b may be configured to have a cross section in a shape of a square or a regular hexagon. The configuration of the second light guiding channel 13b with the square or regular hexagon cross-section enables a more stable light transmission path within the second light guiding channel 13b and reduces the refraction loss, thereby improving the reliability and efficiency of the optical signal transmission. In some embodiments, the second light guiding channel 13b may be configured to have a circular cross section. Due to the shape and structural advantages of the second light guiding channel 13b with the circular cross section, it exhibits improved durability when subjected to external pressure or impact. Moreover, the circular design of the second light guiding channel 13b helps achieve uniform light distribution and reduces problems such as shadows or glare caused by uneven light distribution.

In some embodiments of the present application, the housing 16 may have a polygon cross-section, and the shape of the cross-section of the housing 16 may be adapted to the shapes of the cross-sections of the light guide tube 12 and the zoom barrel 13.

For example, the cross-section of the housing 16 may be a square or a regular hexagon. The configuration of the housing 16 with the square or regular hexagon cross-section can reduce the assembly process difficulty of the luminaire 1, which in turn can reduce the manufacturing cost. Furthermore, a square can well fill the space in a two-dimensional plane. For the luminaire 1, it can minimize the volume of the luminaire 1 as much as possible.

The configuration of the housing 16 with the regular hexagon cross-section can balance the internal forces within the luminaire 1 as much as possible and reduce the structural distortion and deformation. Due to the inherent geometric properties and the symmetry of the regular hexagon, the luminaire 1 has the same strength and stability in different directions. Moreover, each corner of the regular hexagon is supported by two adjacent sides, thereby optimizing the pressure equalization and ensuring that the luminaire 1 is firm.

In some embodiments, the housing 16 may be configured to have a circular cross section. On the one hand, the circle has the largest area for a given perimeter due to its special properties, which means that with a given amount of material, a circular housing can enclose or cover a larger space, thereby improving the material utilization efficiency. On the other hand, due to its simple and smooth lines, the circular cross-section makes the appearance of the housing 16 more aesthetically pleasing and harmonious.

By providing the light source 11, the light guide tube 12, the zoom barrel 13, and the converging lens 14 on the luminaire 1, and covering the first light inlet 12a of the light guide tube 12 on the light source 11, the light guide tube 12 can have a strong light-gathering effect. furthermore, it can concentrate the light emitted by the light source 11 into a relatively small area, making the light passing through the light guide tube 12 more concentrated and brighter. Such a light-gathering effect is particularly important in lighting scenarios where it is necessary to highlight a certain object or area. Besides, as the first light inlet 12a covers the light source 11, the direction and range of the light can be controlled based on the shape and orientation of the light guide tube 12, thereby ensuring that the light can be directed to specific areas as required and avoiding unnecessary interference with other areas.

As the zoom barrel 13 is sleeved over the light guide tube 12 and has the first light outlet 13a that is away from the light source 11, the focusing degree of the light that exits the light guide tube 12 can be changed by adjusting the distance between the zoom barrel 13 and the light source 11, thereby flexibly adjusting the illumination range and brightness and improving the lighting quality.

As the converging lens 14 is arranged on the zoom barrel 13 and blocks the first light outlet 13a, all the light rays that pass through the first light outlet 13a can be regulated by the converging lens 14. As the zoom barrel 13 is movable along the length direction of the light guide tube 12 to vary the distance between the converging lens 14 and the light source 11 and essentially vary the focal length, the light-gathering effect can be achieved. Furthermore, by moving the zoom barrel 13 to vary the focal length, the luminaire 1 eliminates the need for providing complex structures to move the light source 11 along with it during the focusing process. The light guide tube 12 is provided with the first light guiding channel 12b, and the end of the first light guiding channel 12b close to the light source 11 along the length direction of the light guide tube 12 is configured as the first light inlet 12a. Consequently, as the light guide tube 12 is provided with the first light guiding channel 12b, the light emitted by the light source 11 can be uniformly spread out, thereby avoiding the problems of glare and uneven light distribution. As the first light guiding channel 12b has the end close to the light source 11 being configured as the first light inlet 12a, the light collection efficiency can be enhanced, the light quality can be optimized, and the light attenuation during transmission can be reduced.

In the direction away from the light source 11 along the length direction of the light guide tube 12, the cross-sectional area of the first light guiding channel 12b gradually increases. Consequently, as the cross-sectional area of the first light guiding channel 12b gradually increases in the direction away from the light source 11 along the length direction of the light guide tube 12, the light that is emitted by the light source 11 and passes through the light guide tube 12 can illuminate the target area with a broader illumination range, and the angle between the light and the central axis of the light guide tube 12 can be increased.

As the inner wall of the first light guiding channel 12b is provided with the reflective mirror surface, the light reflectivity can be improved due to the reflective mirror surface provided on the inner wall of the first light guiding channel 12b, thereby ensuring that the energy loss during the light transmission within the light guiding channel can be reduced, the light attenuation during the light transmission can be significantly reduced, and the utilization rate of the light can be enhanced. Moreover, the reflective mirror surface can ensure that the light is transmitted along a predetermined path, preventing scattering or deviation from the predetermined path during transmission. This helps maintain the directionality and concentration of the light, enabling the light to illuminate the target area more precisely. Through multiple reflections of the light within the first light guiding channel 12b, the brightness of the light can be increased. Such an enhancement effect makes the illumination more uniform and brighter, improving the illumination quality.

As the zoom barrel 13 is sleeved on the outer peripheral surface of the light guide tube 12, all the light rays that exit the light guide tube 12 enters the zoom barrel 13, thereby enhancing the brightness of the light and improving the illumination quality. Furthermore, the arrangement of sleeving the zoom barrel 13 over the outer peripheral surface of the light guide tube 12 is beneficial for users to adjust the length of the zoom barrel 13 and thus the zoom distance, thereby achieving the zooming effect of the light.

As the zoom barrel 13 is provided with the second light guiding channel 13b extending along the length direction of the zoom barrel 13, and the end of the second light guiding channel 13b distal to the light source 11 is configured as the first light outlet 13a, the body length of the zoom barrel 13 can be fully utilized to increase the range of the focusing distance due to the configuration of the end of the second light guiding channel 13b distal to the light source 11 being configured as the first light outlet 13a, thereby achieving improved light zooming.

As the inner wall of the second light guiding channel 13b is provided with the reflective mirror surface, the light reflectivity can be improved due to the reflective mirror surface provided on the inner wall of the second light guiding channel 13b, thereby ensuring that the energy loss during the light transmission within the light guiding channel can be reduced, the light attenuation during the light transmission can be significantly reduced, and the utilization rate of the light can be enhanced. Moreover, the reflective mirror surface can ensure that the light is transmitted along a predetermined path, preventing scattering or deviation from the predetermined path during the transmission. This helps maintain the directionality and concentration of the light, enabling the light to illuminate the target area more precisely. Through multiple reflections of the light within the second light guiding channel 13b, the brightness of the light can be increased. Such an enhancement effect can make the illumination more uniform and brighter and improve the illumination quality.

As the zoom barrel 13 comprises the plurality of sub-zoom barrels 131 sleeved within each other, all of which are movable relative to the light guide tube 12 in the length direction of the light guide tube 12, the distance between the light source 11 and the converging lens 14 can be fully adjusted to achieve zooming function of the zoom barrel 13 due to the configuration of the zoom barrel 13 which comprises the plurality of sub-zoom barrels 131 sleeved within each other and movable relative to the light guide tube 12 in its length direction, thereby altering the focal length to determine the degree of light convergence. When the zoom barrel 13 moves to shorten the distance between the converging lens 14 and the light source 11, the focal length shortens, the degree of light convergence increases, and the light density at the focal point increases. When the converging lens 14 moves away from the light source 11, the focal length lengthens, the degree of light convergence decreases, and the light density at the focal point decreases.

As the sub-zoom barrel 131 is provided with the second light guiding sub-channel 131a that extends in its length direction and has the cross-sectional area remaining constant along its length direction, when the zoom barrel 13 is moved, the angle of the light can remain unchanged due to the second light guiding sub-channel 131a which extends on the sub-zoom barrels 131 along its length direction and has a constant cross-sectional area along its length direction, thereby making the light travel further and achieving the zooming function.

All the sub-zoom barrels 131 are arranged on the outer side of the light guide tube 12, and the length of the one closer to the light guide tube 12 along the first direction perpendicular to and away from the central axis of the light guide tube 12 is greater than that of the one farther from the light guide tube 12. Thus, due to the sub-zoom barrels 131 provided on the outer side of the light guide tube 12, the distance between the zoom barrel 13 and the light source 11 can be adjusted through movement, thereby varying the focal length of the zoom barrel 13 and improving shooting efficiency. Furthermore, the arrangement, where the length of the one closer to the light guide tube 12 along the first direction perpendicular to and away from the central axis of the light guide tube 12 is greater than that of the one farther from the light guide tube 12, has advantages of improving the maneuverability of the movement of the zoom barrel 13 and facilitating the user to achieve the zoom function.

The purposes, technical solutions and advantages of the application are further described in detail in the abovementioned particular embodiments. It should be understood that all the above are merely particular embodiments of the application and are not intended to limit the application. In particular, the application is intended to cover all changes, equivalents, or modifications obtained by those skilled in the art without departing from the spirit and principle of the application.

## Claims

1. A luminaire (1), **characterized by** comprising:
a light source (11);
a light guide tube (12), which is provided with a first light inlet (12a) covering the light source (11);
a zoom barrel (13), which is sleeved on the light guide tube (12) and is provided with a first light outlet (13a) distal to the light source (11); and
a converging lens (14), which is arranged on the zoom barrel (13) and blocks the first light outlet (13a);
wherein the zoom barrel (13) is movable relative to the light guide tube (12) along a length direction of the light guide tube (12), to vary a distance between the light source (11) and the converging lens (14).

2. The luminaire according to claim 1, wherein the light guide tube (12) is provided with a first light guiding channel (12b), and along the length direction of the light guide tube (12), an end of the first light guiding channel (12b) proximal to the light source (11) is configured as a first light inlet (12a).

3. The luminaire according to claim 2, wherein a cross-sectional area of the first light guiding channel (12b) gradually increases in the length direction of the light guide tube (12) away from the light source (11).

4. The luminaire according to claim 2, wherein an inner wall of the first light guiding channel (12b) is provided with a reflective mirror surface.

5. The luminaire according to claim 1, wherein the zoom barrel (13) is sleeved on an outer peripheral surface of the light guide tube (12).

6. The luminaire according to claim 1, wherein the zoom barrel (13) is provided with a second light guiding channel (13b) extending along a length direction of the zoom barrel, and an end of the second light guiding channel (13b) distal to the light source (11) is configured as a first light outlet (13a).

7. The luminaire according to claim 6, wherein an inner wall of the second light guiding channel (13b) is provided with a reflective mirror surface.

8. The luminaire according to claim 1, wherein the zoom barrel (13) comprises a plurality of sub-zoom barrels (131) sleeved within each other, and all the sub-zoom barrels (131) are movable relative to the light guide tube (12) in the length direction of the light guide tube (12).

9. The luminaire according to claim 8, wherein each of the sub-zoom barrels (131) is provided with a second light guiding sub-channel (131a) extending in a length direction thereof, and the second light guiding sub-channel (131a) has a constant cross-sectional area along the length direction thereof.

10. The luminaire according to claim 8, wherein all the sub-zoom barrels (131) are positioned on an outer side of the light guide tube (12), and a length of the one sub-zoom barrel closer to the light guide tube (12), along a first direction perpendicular to and extending away from a central axis of the light guide tube (12), is greater than that of the one sub-zoom barrel farther from the light guide tube (12).
